# EUROPEAN PATENT APPLICATION

(11) **EP 2 020 431 A1**
(43) Date of publication of application: **04.02.2009**
(21) Application number: 07425502.7
(22) Date of filing: 02.08.2007
(51) Int. Cl.: C09G 1/02, C09K 3/14, C08K 3/20, C08K 3/34, C08K 3/36

(54) **Use of oxides as additives in surface treatment compositions and surface treatment composition**

(71) Applicant: Bellinzoni S.r.L., 20016 Pero (MI) (IT)
(72) Inventor: Bellinzoni, Alessandro, 20020 Arese (MI) (IT); Bellinzoni, Dario, 20020 Arese (MI) (IT)
(74) Representative: Faggioni, Carlo Maria

(57) **Abstract**

The use of oxides as additives in surface treatment compositions, a composition containing said additives and the use of said composition for surface treatments are disclosed.

## Description

The present invention refers to the use of oxides as additives in compositions for surface treatments and to a composition for surface treatments.

Marbles and stone materials in general, both for floors and for walls, shelves, tops and others, are very often smoothened and polished. Various factors tend to impart the surface an opaque look: environmental agents, corrosion, soiling with fatty substances, dirt, dust, pouring of liquids, wear and so on.

It is hence very common practice, since ancient times, to bring the stones back to a shiny condition, by washing and applying a polishing substance, in most cases a wax, which may be natural (beeswax, especially for quality surfaces and wood) or synthetic (paraffin waxes and the like). The wax is applied and spread as deeply as possible, so as not to form superfluous and unpleasing build-ups, creating an extremely thin film. The wax also has a slightly protective function on the stone, being slightly waterproof and withholding part of the fatty dirt.

Unfortunately, all waxes have some drawbacks. Firstly, they make surfaces extremely slippery, causing the floors on which they are applied to become dangerous for those treading thereon. Moreover, the protective action thereof is extremely limited and is not effective towards the main corrosive agents, such as acids; it must be borne in mind that acidic substances corroding marbles are the juice of citrus fruits (in particular lemon juice) and vinegar, which are extremely common in the kitchen. Finally, wax acts on the stone by physically filling the micropores, but is not effectively bonded thereto, so that the duration of the polishing effect is very limited.

The drawbacks set forth above are brilliantly solved by the present invention, consisting in the use of oxides as additives in compositions for the treatment of surfaces.

According to a second aspect, the present invention refers to a surface treatment composition, comprising a carrier, characterised in that solid oxides are added to said carrier.

According to the present invention, oxides are used as additives in surface treatment compositions. The oxides preferably used are quartz, amorphous silica, alumina, titanium oxide, clay, nanoclay, zirconia. Preferably, oxides with particle size between 1 and 100 nm, preferably between 5 and 75 nm, most preferably between 7 and 50 nm are used as additives. The particular type of oxide is chosen according to the desired effects and to the type of stone to be treated.

The present invention provides that, in a surface treatment composition, the additives are mixed with a suitable carrier, with which they are applied to said surface. Suitable carriers are natural waxes, paraffins, resins, water-based and solvent-based, hydro-oil-proof surface protectors. The amount of additive to be added varies according to the type of surface, of the conditions thereof and of the effects to be achieved.

The composition according to the present invention may be used for the treatment of virtually any kind of surface, both inner and outer ones. It is hence possible to treat stones, ceramics, wood, metals, synthetic materials and resins.

Among the stones, natural and artificial stones may be treated.

Among the natural stones, marble, travertine, tuff, moonstone, serpentine and granite may be preferably treated.

Among ceramics, majolica, porcelain, stone pottery, porcelain stone pottery, glazed ceramics may be treated.

As concerns wood, the composition according to the present invention is particularly suited to treat wooden floors and the like.

Among metals, the composition is particularly suited for the treatment of iron, steel, copper, silver, Sheffield, pewter, aluminium, glass.

As concerns the surfaces of synthetic material, the composition of the invention may be used, in particular, for tartan, linoleum and miscellaneous resins.

As concerns use, the composition according to the present invention may be applied to the surfaces to be treated in the usual known ways, already used for the application of the carrier. For example, waxes may be applied as usual, pouring them onto a cloth which is then rubbed across the entire surface.

In a known way, the treatment will fill the pores of the material. A physical interaction between pore and additive results, at a nanometric level, which will hinder the removal of the oxide particle from the pore. This has several useful effects. Firstly, the particle will not easily trail and will hence be unable to scratch the floor, although oxides are usually rather hard. Secondly, since waxes or other carrier products no longer come into direct contact with what rests on the surface, friction is greater than what would be normal with the sole carrier, so that slipping is reduced or even eliminated. Moreover, since the pore is partly occupied by oxide particles, it takes longer for the dirt to take up the pore partly or entirely, so that a longer-lasting polish is obtained. In some cases, then, the oxide acts as a barrier, preventing access to the material on which it is applied to corrosive substances, thereby also extending the life of the material.

Finally, surface wear is reduced by the fact of having the surfaces completely covered.

## Claims

1. Use of oxides as additives in surface treatment compositions.

2. Use as claimed in claim 1), **characterised in that** said oxides are quartz, amorphous silica, alumina, titanium oxide, clay, nanoclay, zirconia.

3. Composition for surface treatment, comprising a carrier, **characterised in that** solid oxides are added to said carrier.

4. Composition as claimed in claim 3), **characterised in that** said oxides are quartz, amorphous silica, alumina, titanium oxide, clay, nanoclay, zirconia.

5. Composition as claimed in claims 3) or 4), **characterised in that** said oxides have a particle size between 1 and 100 nm.

6. Composition as claimed in claim 5), **characterised in that** said oxides have a particle size between 5 and 75 nm.

7. Composition as claimed in claim 5) or 6), **characterised in that** said oxides have a particle size between 7 and 50 nm.

8. Composition as claimed in any one of claims 3) to 7), **characterised in that** said carrier is chosen from the group consisting of natural waxes, paraffins, resins, water-based or solvent-based, hydro-oil-proof surface protectors.

9. Use of a composition as in any one of claims 3) to 8) for the treatment of stones, ceramics, wood, metals and synthetic materials.

10. Use as claimed in claim 9), **characterised in that** it is intended for the treatment of natural or artificial stones.

11. Use as claimed in claim 10), **characterised in that** said stones are marble, travertine, tuff, moonstone, serpentine or granite.

12. Use as claimed in claim 9), for treating majolica, porcelain, stone pottery, porcelain stone pottery, glazed ceramics.

13. Use as claimed in claim 9), for treating wooden floors.

14. Use as claimed in claim 9), for the treatment of iron, steel, copper, silver, Sheffield, pewter, aluminium, glass.

15. Use as claimed in claim 9), for treating tartan, linoleum and miscellaneous resins.
